# EUROPÄISCHE PATENTANMELDUNG

(11) **EP 4 446 830 A1**
(43) Veröffentlichungstag der Anmeldung: **16.10.2024**
(21) Anmeldenummer: 23167993.7
(22) Anmeldetag: 14.04.2023
(51) Int. Cl.: G05B 19/042, G05B 19/05

(54) **BEREITSTELLEN EINES EINGANGSSIGNALS FÜR EINE SIGNALSENKE**

(71) Anmelder: Siemens Aktiengesellschaft, 80333 München (DE)
(72) Erfinder: Kerpen, Heinz, 91074 Herzogenaurach (DE); Schwede, Sebastian, 90408 Nürnberg (DE)
(74) Vertreter: Siemens Patent Attorneys

(57) **Zusammenfassung**

Die Erfindung betrifft ein Verfahren zum Bereitstellen eines Eingangssignals (7) für eine Signalsenke (5) mittels einer Konfigurationseinheit (3). Die Konfigurationseinheit (3) ist eingerichtet, aus einer Signalquelle (1) einen Signalwert (9) für das Eingangssignal (7) zu empfangen und es einem Benutzer der Konfigurationseinheit (3) zu ermöglichen, einen Ersatzwert für den Signalwert (9) der Signalquelle (1) zu definieren, wenn die Signalquelle (1) keinen Signalwert (9) liefert.

## Beschreibung

*Unabhängig vom grammatikalischen Geschlecht eines bestimmten Begriffes sind Personen mit männlicher, weiblicher oder anderer Geschlechteridentität mit umfasst.*

Die Erfindung betrifft ein Verfahren und eine Konfigurationseinheit zum Bereitstellen eines Eingangssignals für eine Signalsenke.

Um ein System, beispielsweise ein Antriebssystem, zu steuern oder zu regeln, werden in der Regel Signale verarbeitet. Signalquellen, diese Signale liefern, sind beispielsweise Sensoren. Signalwerte dieser Signale sind beispielsweise Werte einer Temperatur, eines Druckes, einer elektrischen Stromstärke, einer elektrischen Spannung oder einer Drehzahl. Wenn eine Signalquelle ausfällt oder die Verbindung zu einer Signalquelle gestört oder unterbrochen wird, muss das Signal der Signalquelle durch einen Ersatzwert ersetzt werden. Ersatzwerte werden in der Regel automatisch von dem System gesetzt.

Der Erfindung liegt die Aufgabe zugrunde, ein Verfahren und eine Konfigurationseinheit zum Bereitstellen eines Eingangssignals für eine Signalsenke anzugeben, die insbesondere hinsichtlich der Definition von Ersatzwerten verbessert sind.

Die Aufgabe wird erfindungsgemäß durch ein Verfahren mit den Merkmalen des Anspruchs 1, eine Konfigurationseinheit mit den Merkmalen des Anspruchs 9 und ein Computerprogrammprodukt mit den Merkmalen des Anspruchs 15 gelöst.

Vorteilhafte Ausgestaltungen der Erfindung sind Gegenstand der Unteransprüche.

Bei dem erfindungsgemäßen Verfahren wird ein Eingangssignal für eine Signalsenke mittels einer Konfigurationseinheit bereitgestellt, wobei die Konfigurationseinheit eingerichtet wird,
- aus einer Signalquelle einen Signalwert für das Eingangssignal zu empfangen und
- es einem Benutzer der Konfigurationseinheit zu ermöglichen, einen Ersatzwert für den Signalwert der Signalquelle zu definieren, wenn die Signalquelle keinen Signalwert liefert.

Die Konfigurationseinheit ermöglicht es einem Benutzer also, selbst einen Ersatzwert für einen Signalwert einer Signalquelle zu definieren, wenn die Signalquelle keinen Signalwert liefert, beispielsweise weil die Signalquelle ausfällt oder die Verbindung zu der Signalquelle gestört oder unterbrochen wird. Dadurch kann ein benutzerspezifischer Ersatzwert definiert werden, beziehungsweise der Ersatzwert kann von dem Benutzer dessen Wünschen angepasst werden, im Unterschied beispielsweise zu einem von dem System automatisch gesetzten Ersatzwert.

Bei einer Ausgestaltung des erfindungsgemäßen Verfahrens wird die Konfigurationseinheit eingerichtet, der Art des Eingangssignals angepasste Signalquellen zu bestimmen und es dem Benutzer zu ermöglichen, die Signalquelle aus diesen Signalquellen auszuwählen.

Die vorgenannte Ausgestaltung des erfindungsgemäßen Verfahrens ermöglicht es dem Benutzer der Konfigurationseinheit, die Signalquelle selbst zu bestimmen. Die Konfigurationseinheit bestimmt dazu der Art des Eingangssignals angepasste Signalquellen, unter denen der Benutzer eine Signalquelle auswählen kann. Beispielsweise ist die Konfigurationseinheit eingerichtet, für diese Auswahl Signalquellen zu bestimmen, deren Signalwerte einer dem Eingangssignal angepassten physikalischen Größe entsprechen. Wenn die physikalische Größe des Eingangssignals beispielsweise eine Temperatur ist, bestimmt die Konfigurationseinheit als von dem Benutzer auswählbare Signalquellen also beispielsweise Signalquellen, deren Signalwerte Temperaturwerte sind. Durch die Anpassung der auswählbaren Signalquellen an das Eingangssignal wird dem Benutzer das Auswählen einer Signalquelle erleichtert, und es wird die Gefahr von Fehlern beim Auswählen der Signalquelle durch den Benutzer reduziert.

Bei einer weiteren Ausgestaltung des erfindungsgemäßen Verfahrens wird die Konfigurationseinheit eingerichtet, es dem Benutzer zu ermöglichen, für die Definition des Ersatzwertes als Ersatz für die Signalquelle eine Ersatzsignalquelle auszuwählen, deren Signalwert als Ersatzwert verwendet wird.

Gemäß der vorgenannten Ausgestaltung des erfindungsgemäßen Verfahrens bietet die Konfigurationseinheit dem Benutzer für die Definition des Ersatzwertes eine Auswahl von Ersatzsignalquellen an. Durch Auswählen einer dieser Ersatzsignalquellen wird der von dieser Ersatzsignalquelle gelieferte Signalwert als Ersatzwert definiert.

Bei einer weiteren Ausgestaltung des erfindungsgemäßen Verfahrens wird die Konfigurationseinheit eingerichtet, eine der Art des Eingangssignals angepasste Vorauswahl von Ersatzsignalquellen zu bestimmen und es einem Benutzer der Konfigurationseinheit zu ermöglichen, die Auswahl der Ersatzsignalquelle auf diese Vorauswahl einzuschränken.

Gemäß der vorgenannten Ausgestaltung des erfindungsgemäßen Verfahrens kann die Auswahl der Ersatzsignalquellen durch den Benutzer auf eine von der Konfigurationseinheit bestimmte Vorauswahl eingeschränkt werden. Die Vorauswahl der Ersatzsignalquellen ist dabei der Art des Eingangssignals der Signalsenke angepasst. Beispielsweise schränkt die Vorauswahl die auswählbaren Ersatzsignalquellen auf Ersatzsignalquellen ein, deren Signalwerte einer dem Eingangssignal angepassten physikalischen Größe entsprechen. Wenn die physikalische Größe des Eingangssignals beispielsweise eine Temperatur ist, schränkt die Vorauswahl die auswählbaren Ersatzsignalquellen auf Ersatzsignalquellen ein, deren Signalwerte Temperaturwerte sind. Durch eine derartige Vorauswahl von Ersatzsignalquellen wird dem Benutzer das Auswählen einer Ersatzsignalquelle erleichtert, und es wird die Gefahr von Fehlern beim Auswählen der Ersatzsignalquelle durch den Benutzer reduziert. Die Bereitstellung einer Vorauswahl von Ersatzsignalquellen durch die Konfigurationseinheit kann dabei von dem Benutzer aktiviert und deaktiviert werden, so dass der Benutzer selbst entscheiden kann, ob er die Vorauswahl in Anspruch nimmt oder nicht.

Bei einer weiteren Ausgestaltung des erfindungsgemäßen Verfahrens wird die Konfigurationseinheit eingerichtet, es einem Benutzer der Konfigurationseinheit zu ermöglichen, als Ersatzwert einen Festwert zu definieren.

Gemäß der vorgenannten Ausgestaltung des erfindungsgemäßen Verfahrens ermöglicht es die Konfigurationseinheit einem Benutzer, einen Festwert als Ersatzwert für den Signalwert zu definieren. Im Unterschied zu einem von einer Ersatzsignalquelle gelieferten Ersatzwert handelt es sich bei dem Festwert um einen Zahlenwert, den der Benutzer selbst eingeben oder aus einem von der Konfigurationseinheit angebotenen Auswahlmenü auswählen kann.

Bei einer weiteren Ausgestaltung des erfindungsgemäßen Verfahrens wird die Konfigurationseinheit eingerichtet, es einem Benutzer der Konfigurationseinheit zu ermöglichen, einen Festwert als Ersatzwert für den Signalwert auch dann zu definieren, wenn die Signalquelle einen Signalwert liefert.

Gemäß der vorgenannten Ausgestaltung des erfindungsgemäßen Verfahrens ermöglicht es die Konfigurationseinheit einem Benutzer, einen Festwert als Ersatz für eine Signalquelle unabhängig davon zu definieren, ob die Signalquelle einen Signalwert liefert. In diesem Fall ersetzt also der Festwert die Signalquelle vollständig.

Bei einer weiteren Ausgestaltung des erfindungsgemäßen Verfahrens wird die Konfigurationseinheit eingerichtet, das aktuelle Eingangssignal und alle zugehörigen Signalverschaltungsinformationen in einem einzigen Datenpaket an ein unter Verwendung der Signalsenke gesteuertes System, beispielsweise ein elektrisches Antriebssystem, zu senden.

Die Signalverschaltungsinformationen umfassen insbesondere die Quelle des Eingangssignals, das heißt sie enthalten die Information, ob die Quelle des Eingangssignals die Signalquelle, eine Ersatzsignalquelle oder ein Festwert ist. Durch die Übertragung des Eingangssignals und aller zugehörigen Signalverschaltungsinformationen in einem einzigen Datenpaket wird die Konsistenz der übertragenen Informationen gesichert, das heißt es werden Inkonsistenzen vermieden, die bei dem Übertragen der Informationen mit mehreren Datenpaketen auftreten können.

Bei einer weiteren Ausgestaltung des erfindungsgemäßen Verfahrens wird die Signalsenke eingerichtet, das aktuelle Eingangssignal und alle zugehörigen Signalverschaltungsinformationen anzuzeigen.

Dadurch können dem Benutzer alle das Eingangssignal betreffenden Informationen vorteilhaft direkt an der Signalsenke angezeigt werden.

Eine erfindungsgemäße Konfigurationseinheit zum Bereitstellen eines Eingangssignals für eine Signalsenke ist eingerichtet,
- aus einer Signalquelle einen Signalwert für das Eingangssignal zu empfangen und
- es einem Benutzer der Konfigurationseinheit zu ermöglichen, einen Ersatzwert für den Signalwert der Signalquelle zu definieren, wenn die Signalquelle keinen Signalwert liefert.

Gemäß einer Ausgestaltung der Erfindung ist die Konfigurationseinheit eingerichtet, der Art des Eingangssignals angepasste Signalquellen zu bestimmen und es dem Benutzer zu ermöglichen, die Signalquelle aus diesen Signalquellen auszuwählen.

Gemäß einer weiteren Ausgestaltung der Erfindung ist die Konfigurationseinheit eingerichtet, es dem Benutzer zu ermöglichen, für die Definition des Ersatzwertes als Ersatz für die Signalquelle eine Ersatzsignalquelle auszuwählen, deren Signalwert als Ersatzwert verwendet wird.

Gemäß einer weiteren Ausgestaltung der Erfindung ist die Konfigurationseinheit eingerichtet, eine der Art des Eingangssignals angepasste Vorauswahl von Ersatzsignalquellen zu bestimmen und es einem Benutzer der Konfigurationseinheit zu ermöglichen, die Auswahl der Ersatzsignalquelle auf diese Vorauswahl einzuschränken.

Gemäß einer weiteren Ausgestaltung der Erfindung ist die Konfigurationseinheit eingerichtet, es einem Benutzer der Konfigurationseinheit zu ermöglichen, als Ersatzwert einen Festwert zu definieren.

Gemäß einer weiteren Ausgestaltung der Erfindung ist die Konfigurationseinheit eingerichtet, es einem Benutzer der Konfigurationseinheit zu ermöglichen, einen Festwert als Ersatzwert für den Signalwert auch dann zu definieren, wenn die Signalquelle einen Signalwert liefert.

Gemäß einer weiteren Ausgestaltung der Erfindung ist die Konfigurationseinheit eingerichtet, das aktuelle Eingangssignal und alle zugehörigen Signalverschaltungsinformationen in einem einzigen Datenpaket an ein unter Verwendung der Signalsenke gesteuertes System, beispielsweise ein elektrisches Antriebssystem, zu senden.

Eine erfindungsgemäße Konfigurationseinheit kann ferner insbesondere einen Webserver aufweisen, der von einem Benutzer beispielsweise über einen Web-Client kontaktierbar ist und über den die Konfigurationseinheit von dem Benutzer, beispielsweise über eine grafische Benutzeroberfläche, bedienbar ist.

Ein erfindungsgemäßes Computerprogrammprodukt umfasst Befehle, die bei der Ausführung der Befehle durch einen Computer diesen veranlassen, das erfindungsgemäße Verfahren als Konfigurationseinheit auszuführen.

Eine erfindungsgemäße Konfigurationseinheit und ein erfindungsgemäßes Computerprogrammprodukt ermöglichen die Ausführung des erfindungsgemäßen Verfahrens. Daher entsprechen die Vorteile einer erfindungsgemäßen Konfigurationseinheit und eines erfindungsgemäßen Computerprogrammproduktes den oben genannten Vorteilen des erfindungsgemäßen Verfahrens.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
- FIG 1: ein Blockdiagramm einer Signalquelle, einer Konfigurationseinheit und einer Signalsenke,
- FIG 2: ein Auswahlmenü zum Auswählen einer Signalquelle.

Einander entsprechende Teile sind in den Figuren mit denselben Bezugszeichen versehen.

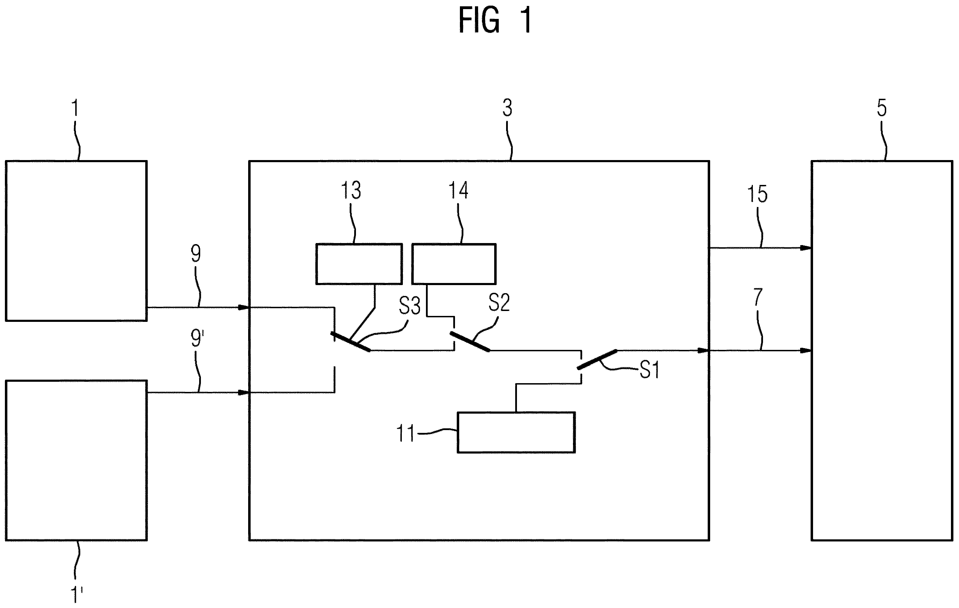

FIG 1 zeigt ein Blockdiagramm einer Signalquelle 1, einer Konfigurationseinheit 3 gemäß einem Ausführungsbeispiel der Erfindung und einer Signalsenke 5. Die Signalquelle 1, die Konfigurationseinheit 3 und die Signalsenke 5 sind beispielsweise Komponenten einer Steuerung eines elektrischen Antriebssystems.

Die Signalquelle 1 ist beispielsweise ein Sensor, der eingerichtet ist, den Wert einer physikalischen Größe zu erfassen, beispielsweise den Wert einer Temperatur, eines Druckes, eines elektrischen Stroms, einer elektrischen Spannung oder einer Drehzahl.

Die Konfigurationseinheit 3 ist eingerichtet, der Art des Eingangssignals 7 angepasste Signalquellen 1, 1' zu bestimmen und es einem Benutzer der Konfigurationseinheit 3 zu ermöglichen, die Signalquelle 1 aus diesen Signalquellen 1, 1' auszuwählen. Die Option der Auswahl der Signalquelle 1 ist in FIG 1 durch ein Schaltsymbol S3 symbolisiert. Für die Auswahl der Signalquelle 1 stellt die Konfigurationseinheit 3 dem Benutzer beispielsweise ein Auswahlmenü 13 bereit, mit dem der Benutzer die Signalquelle 1 auswählen kann.

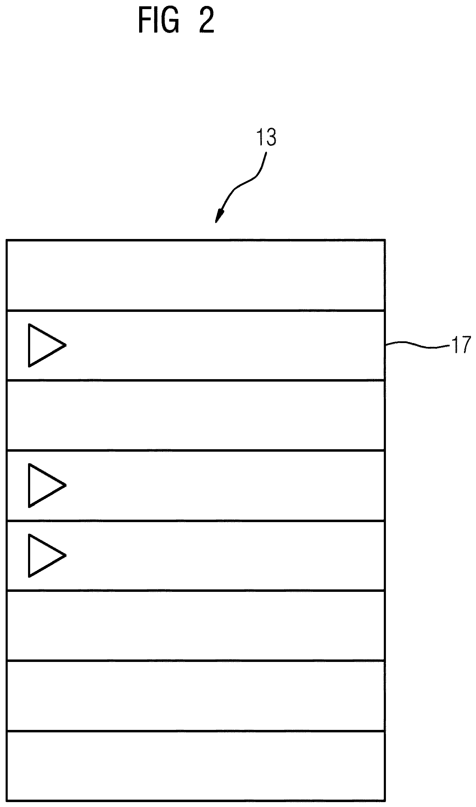

FIG 2 zeigt beispielhaft ein Auswahlmenü 13. Das Auswahlmenü 13 weist mehrere übereinander angeordnete Auswahlfelder 17 auf. Jedem Auswahlfeld 17 ist eine Signalquelle 1, 1' zugeordnet, die über das jeweilige Auswahlfeld 17, beispielsweise durch einen Mausklick, ausgewählt werden kann.

Die Konfigurationseinheit 3 ist ferner eingerichtet, eine der Art des Eingangssignals 7 angepasste Vorauswahl von Signalquellen 1, 1' zu bestimmen und es einem Benutzer der Konfigurationseinheit 3 zu ermöglichen, die Auswahl der Signalquelle 1 auf diese Vorauswahl einzuschränken. In FIG 2 weisen diejenigen Auswahlfelder 17, denen Signalquellen 1, 1' einer solchen Vorauswahl zugeordnet sind, ein Pfeilsymbol auf, das die vorausgewählten Signalquellen 1, 1' kennzeichnet. Der Benutzer kann, beispielsweise über ein weiteres Auswahlfeld, entscheiden, ob die Auswahl der Signalquelle 1 auf die vorausgewählten Signalquellen 1, 1' eingeschränkt wird.

Die Konfigurationseinheit 3 stellt ein Eingangssignal 7 für die Signalsenke 5 bereit. Zu diesem Zweck ist die Konfigurationseinheit 3 eingerichtet, aus der Signalquelle 1 einen Signalwert 9 für das Eingangssignal 7 zu empfangen. Ferner ermöglicht es die Konfigurationseinheit 3 einem Benutzer der Konfigurationseinheit 3, einen Ersatzwert für den Signalwert 9 der Signalquelle 1 zu definieren.

Für die Definition des Ersatzwertes stellt die Konfigurationseinheit 3 dem Benutzer zwei Möglichkeiten zur Verfügung. Zum einen ermöglicht sie dem Benutzer, einen Festwert für das Eingangssignal 7 zu definieren. Der Festwert ist eine von dem Benutzer definierbare Zahl. Die Option der Definition eines Festwertes für das Eingangssignal 7 ist in FIG 1 durch ein Schaltsymbol S1 symbolisiert. Für die Definition des Festwertes stellt die Konfigurationseinheit 3 dem Benutzer beispielsweise ein Eingabefeld 11 bereit, in das der Benutzer den Festwert eintragen kann.

Zum andern ermöglicht die Konfigurationseinheit 3 dem Benutzer, einen Ersatzwert zu definieren, der von der Konfigurationseinheit 3 automatisch anstelle des Signalwertes 9 verwendet wird, wenn kein Festwert für das Eingangssignal 7 definiert ist und die Signalquelle 1 keinen Signalwert 9 liefert, beispielsweise weil die Signalquelle 1 ausfällt oder die Verbindung zu der Signalquelle 1 gestört oder unterbrochen wird. Alternativ oder zusätzlich ermöglicht die Konfigurationseinheit 3 dem Benutzer, für die Definition des Ersatzwertes als Ersatz für die Signalquelle 1 eine Ersatzsignalquelle auszuwählen, deren Signalwert als Ersatzwert verwendet wird, wenn kein Festwert für das Eingangssignal 7 definiert ist. Die Option der Verwendung eines derartigen Ersatzwertes ist in FIG 1 durch ein Schaltsymbol S2 symbolisiert. Für die Definition des Ersatzwertes stellt die Konfigurationseinheit 3 dem Benutzer beispielsweise ein Steuerelement 14 bereit. Für die Definition eines von der Konfigurationseinheit 3 automatisch anstelle des Signalwertes 9 zu verwendenden Ersatzwertes weist das Steuerelement 14 beispielsweise ein Eingabefeld auf, in das der Benutzer den Ersatzwert eintragen kann. Für die Auswahl einer Ersatzsignalquelle weist das Steuerelement beispielsweise ein Auswahlmenü bereit, mit dem der Benutzer die Ersatzsignalquelle auswählen kann und das analog zu dem Auswahlmenü 13 gestaltet ist. Wie für die Auswahl der Signalquelle 1 kann die Konfigurationseinheit 3 ferner eingerichtet sein, eine der Art des Eingangssignals 7 angepasste Vorauswahl von Ersatzsignalquellen zu bestimmen und es einem Benutzer der Konfigurationseinheit 3 zu ermöglichen, die Auswahl der Ersatzsignalquelle auf diese Vorauswahl einzuschränken. Der Benutzer kann, beispielsweise über ein weiteres Auswahlfeld, entscheiden, ob die Auswahl der Ersatzsignalquelle auf die vorausgewählten Ersatzsignalquellen eingeschränkt wird.

Von der Konfigurationseinheit 3 werden das Eingangssignal 7 und alle zugehörigen Signalverschaltungsinformationen 15 an die Signalsenke 5 übertragen. Die Signalverschaltungsinformationen 15 umfassen insbesondere die Quelle des Eingangssignals 7, das heißt sie enthalten die Information, ob die Quelle des Eingangssignals 7 die Signalquelle 1, ein Ersatzwert, eine Ersatzsignalquelle oder ein Festwert ist. Das Eingangssignal 7 und die Signalverschaltungsinformationen 15 werden an der Signalsenke 5 angezeigt.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Unabhängig vom grammatikalischen Geschlecht eines bestimmten Begriffs sind Personen mit männlicher, weiblicher oder anderer Geschlechteridentität mit umfasst.

## Patentansprüche

1. Verfahren zum Bereitstellen eines Eingangssignals (7) für eine Signalsenke (5) mittels einer Konfigurationseinheit (3), wobei die Konfigurationseinheit (3) eingerichtet wird,
- aus einer Signalquelle (1) einen Signalwert (9) für das Eingangssignal (7) zu empfangen und
- es einem Benutzer der Konfigurationseinheit (3) zu ermöglichen, einen Ersatzwert für den Signalwert (9) der Signalquelle (1) zu definieren, wenn die Signalquelle (1) keinen Signalwert (9) liefert.

2. Verfahren nach Anspruch 1, wobei die Konfigurationseinheit (3) eingerichtet wird, der Art des Eingangssignals angepasste Signalquellen (1, 1') zu bestimmen und es dem Benutzer zu ermöglichen, die Signalquelle (1) aus diesen Signalquellen (1, 1') auszuwählen.

3. Verfahren nach Anspruch 1 oder 2, wobei die Konfigurationseinheit (3) eingerichtet wird, es dem Benutzer zu ermöglichen, für die Definition des Ersatzwertes als Ersatz für die Signalquelle (1) eine Ersatzsignalquelle auszuwählen, deren Signalwert (9) als Ersatzwert verwendet wird.

4. Verfahren nach Anspruch 3, wobei die Konfigurationseinheit (3) eingerichtet wird, eine der Art des Eingangssignals (7) angepasste Vorauswahl von Ersatzsignalquellen zu bestimmen und es einem Benutzer der Konfigurationseinheit (3) zu ermöglichen, die Auswahl der Ersatzsignalquelle auf diese Vorauswahl einzuschränken.

5. Verfahren nach einem der vorhergehenden Ansprüche, wobei die Konfigurationseinheit (3) eingerichtet wird, es einem Benutzer der Konfigurationseinheit (3) zu ermöglichen, als Ersatzwert einen Festwert zu definieren.

6. Verfahren nach Anspruch 5, wobei die Konfigurationseinheit (3) eingerichtet wird, es einem Benutzer der Konfigurationseinheit (3) zu ermöglichen, einen Festwert als Ersatzwert für den Signalwert (9) auch dann zu definieren, wenn die Signalquelle (1) einen Signalwert (9) liefert.

7. Verfahren nach einem der vorhergehenden Ansprüche, wobei die Konfigurationseinheit (3) eingerichtet wird, das aktuelle Eingangssignal (7) und alle zugehörigen Signalverschaltungsinformationen (15) in einem einzigen Datenpaket an ein unter Verwendung der Signalsenke (5) gesteuertes System, beispielsweise ein elektrisches Antriebssystem, zu senden.

8. Verfahren nach einem der vorhergehenden Ansprüche, wobei die Signalsenke (5) eingerichtet wird, das aktuelle Eingangssignal (7) und alle zugehörigen Signalverschaltungsinformationen (15) anzuzeigen.

9. Konfigurationseinheit (3) zum Bereitstellen eines Eingangssignals (7) für eine Signalsenke (5), wobei die Konfigurationseinheit (3) eingerichtet ist,
- aus einer Signalquelle (1) einen Signalwert (9) für das Eingangssignal (7) zu empfangen und
- es einem Benutzer der Konfigurationseinheit (3) zu ermöglichen, einen Ersatzwert für den Signalwert (9) der Signalquelle (1) zu definieren, wenn die Signalquelle (1) keinen Signalwert (9) liefert.

10. Konfigurationseinheit (3) nach Anspruch 9, die eingerichtet ist, der Art des Eingangssignals angepasste Signalquellen (1, 1') zu bestimmen und es dem Benutzer zu ermöglichen, die Signalquelle (1) aus diesen Signalquellen (1, 1') auszuwählen.

11. Konfigurationseinheit (3) nach Anspruch 9 oder 10, die eingerichtet ist, es dem Benutzer zu ermöglichen, für die Definition des Ersatzwertes als Ersatz für die Signalquelle (1) eine Ersatzsignalquelle auszuwählen, deren Signalwert (9) als Ersatzwert verwendet wird.

12. Konfigurationseinheit (3) nach Anspruch 11, die eingerichtet ist, eine der Art des Eingangssignals (7) angepasste Vorauswahl von Ersatzsignalquellen zu bestimmen und es einem Benutzer der Konfigurationseinheit (3) zu ermöglichen, die Auswahl der Ersatzsignalquelle auf diese Vorauswahl einzuschränken.

13. Konfigurationseinheit (3) nach einem der Ansprüche 9 bis 12, die eingerichtet ist, es einem Benutzer der Konfigurationseinheit (3) zu ermöglichen, als Ersatzwert einen Festwert zu definieren.

14. Konfigurationseinheit (3) nach einem der Ansprüche 9 bis 13, die eingerichtet ist, das aktuelle Eingangssignal (7) und alle zugehörigen Signalverschaltungsinformationen (15) in einem einzigen Datenpaket an ein unter Verwendung der Signalsenke (5) gesteuertes System, beispielsweise ein elektrisches Antriebssystem, zu senden.

15. Computerprogrammprodukt, umfassend Befehle, die bei der Ausführung der Befehle durch einen Computer diesen veranlassen, das Verfahren nach einem der Ansprüche 1 bis 7 als Konfigurationseinheit (3) auszuführen.
